# EUROPÄISCHE PATENTSCHRIFT

(11) **EP 2 766 149 B1**
(45) Veröffentlichungstag und Bekanntmachung des Hinweises auf die Patenterteilung: **10.02.2016**
(21) Anmeldenummer: 12769064.2
(22) Anmeldetag: 21.09.2012
(51) Int. Cl.: B23K 35/32, B23P 6/04, F01D 5/00, B23K 26/34

(54) **VERFAHREN ZUM REPARIEREN VON OBERFLÄCHENSCHÄDEN EINER STRÖMUNGSMASCHINENKOMPONENTE**
METHOD FOR REPAIRING SURFACE DAMAGE TO A FLOW ENGINE COMPONENT
PROCÉDÉ DE RÉPARATION DE DOMMAGES SUPERFICIELS D'UN COMPOSANT DE TURBOMACHINE

(30) Priorität: 14.10.2011 EP 11185208
(43) Veröffentlichungstag der Anmeldung: 20.08.2014
(73) Patentinhaber: Siemens Aktiengesellschaft, 80333 München (DE)
(72) Erfinder: BARNIKEL, Jochen, 45470 Mülheim an der Ruhr (DE); GOLLERTHAN, Susanne, 44787 Bochum (DE); KRAPPITZ, Harald, 73230 Kirchheim unter Teck (DE); REINKENSMEIER, Ingo, 58730 Fröndenberg (DE)
(86) Internationale Anmeldenummer: PCT/EP2012/068652
(87) Internationale Veröffentlichungsnummer: WO 2013/053582

(56) Entgegenhaltungen:
- EP-A1- 1 642 666
- Alexander ET AL: "BRAZING OF TITANIUM AT TEMPERATURES BELOW 800°C: REVIEW AND PROSPECTIVE APPLICATIONS", , 19. Februar 2007 (2007-02-19), Seiten 1-22, XP055048771, Gefunden im Internet: URL:http://www.titanium-brazing.com/public ations/DVS-Manuscript_1020-Copy2-19-07.pdf [gefunden am 2013-01-08]

## Beschreibung

Das Verfahren betrifft ein Verfahren zum Reparieren von Oberflächenschäden einer Strömungsmaschinenkomponente.

Eine Gasturbine weist einen Verdichter und eine Turbine auf. Sowohl im Verdichter als auch in der Turbine kommen Schaufeln zum Einsatz, unterschieden werden dabei feststehende Leitschaufeln und rotierende Laufschaufeln.

Als Material für die Laufschaufeln werden unter anderem Titanlegierungen eingesetzt, welche eine hohe Festigkeit, eine niedrige Dichte sowie eine gute Korrosionsbeständigkeit haben. Nachteilig haben die Titanlegierungen eine hohe Kerbempfindlichkeit und eine hohe Rissempfindlichkeit.

Insbesondere die Laufschaufeln sind verschiedenen Verschleißprozessen ausgesetzt, z.B. ein Verschleiß durch Reibung oder durch Oxidation. Speziell in einer Dampfturbine tritt als Verschleißprozess eine Tropfenschlagerosion auf. In der Dampfturbine bilden sich Nebeltröpfchen aus Wasser, die von den Leitschaufeln eingefangen werden, dort akkumulieren und von den Austrittskanten der Leitschaufeln als Wassertropfen abreißen. Die Wassertropfen haben eine geringe Absolutgeschwindigkeit, aber aufgrund der Rotation der Laufschaufeln haben sie eine große Relativgeschwindigkeit zu den Laufschaufeln. Schlagen die Wassertropfen mit ihrer großen Relativgeschwindigkeit auf die Laufschaufeln auf, so führt dies zu einer Bildung von Kerben auf der Oberfläche der Laufschaufeln.

Für eine Reduzierung der Tropfenschlagerosion stehen verschiedene Verfahren zur Auswahl. Auf der Oberfläche der Laufschaufel kann eine gegen Tropfenschlagerosion beständige Schicht durch thermisches Spritzen aufgetragen werden. Des Weiteren kann eine harte Schicht auf die Oberfläche der Laufschaufel durch Schweißen aufgebracht werden. Jedoch erhöht sich durch die genannten Verfahren nachteilig die Rissempfindlichkeit der Laufschaufeln, insbesondere an den Grenzflächen zwischen der Titanlegierung und der harten Schicht, wodurch die Lebensdauer der Laufschaufeln reduziert wird. Weiterhin ist nachteilig, dass die Schichten nach einer Beschädigung durch Tropfenschlagerosion nicht wieder auf die Laufschaufel aufgebracht werden können, weil die genannten Verfahren eine glatte Oberfläche erfordern.

Das Dokument "Brazing of Titanium at temperatures Below 800°C: review and Prospective Applications", A.E. Shapiro und Y.A. Flom, 19 Feb 2007, S. 1-22, URL:http://www.titanium-brazing.com/publications/DVS-manuscript, betrifft ein Verfahren zum Reparieren von Turbinenteilen aus Titanlegierungen, z.B. Ti6Al4V, bei Temperaturen von 800°C. Das offenbarte Verfahren verwendet Lotlegierungen auf Basis von Ag oder Al.

Aufgabe der Erfindung ist es, ein Verfahren zum Reparieren von Oberflächenschäden einer Strömungsmaschinenkomponente und eine mit dem Verfahren reparierte Strömungsmaschinenkomponente zu schaffen, wobei das Verfahren einfach und wiederholt anwendbar ist sowie die Strömungsmaschinenkomponente eine lange Lebensdauer hat.

Das erfindungsgemäße Verfahren zum Reparieren von Oberflächenschäden einer Strömungsmaschinenkomponente, welche einen Titan aufweisenden Grundwerkstoff aufweist, weist folgende Schritte auf: Mischen eines Lots, das eine Titan aufweisende Legierung und ein Pulver aufweist, welches in dem Lot verteilt ist und den Grundwerkstoff aufweist; Aufbringen des Lots auf Stellen der Strömungsmaschinenkomponente, an denen sich die Oberflächenschäden befinden; Einbringen einer Wärmemenge in das Lot und in die Strömungsmaschinenkomponente, so dass die Legierung flüssig wird und dadurch die Stellen benetzt werden; Abkühlen des Lots, so dass die Legierung fest wird.

Dadurch, dass sowohl die Legierung als auch der Grundwerkstoff Titan aufweisen und der Legierung ein Pulver beigemischt wird, welches den Grundwerkstoff aufweist, wird das Lot dem Grundwerkstoff ähnlich in Bezug auf seine physikalischen Eigenschaften, so dass keine scharfen metallurgischen Kerben entstehen und das Lot vorteilhaft gut an den Grundwerkstoff anbindet. Insbesondere bei Laufschaufeln können im Betrieb der Strömungsmaschine durch Fliehkräfte oder durch Schwingungen an der Grenzfläche zwischen dem Grundwerkstoff und dem Lot Risse entstehen. Durch die gute Anbindung des Lots an den Grundwerkstoff und die Vermeidung der scharfen metallurgischen Kerben wird die Bildung der Risse vermindert, wodurch sich vorteilhaft eine lange Lebensdauer der Strömungsmaschinenkomponente ergibt.

Mit dem erfindungsgemäßen Verfahren ist es möglich, eine Vielzahl an Oberflächenschäden, wie z.B. Risse oder Oberflächenabtragungen, zu reparieren. Indem die Legierung flüssig wird, kann sie vorteilhaft in Risse, Kerben, Mulden und Krater eindringen und diese ausfüllen. Eine Voraussetzung für die Reparatur von Rissen ist, dass die Risse frei von Oxiden sind. Denkbar sind neben den aufgezählten Geometrien auch weitere beliebige Geometrien von Oberflächenabtragungen. Das Verfahren ist vorteilhaft einfach und auf beliebige Geometrien von Strömungsmaschinenkomponenten anwendbar. Vorteilhaft kann die ursprüngliche Oberflächenkontur der Strömungsmaschinenkomponente nach einer Erosion wiederhergestellt werden, selbst dann, wenn verschiedene Tiefen von Erosion vorliegen. Ferner kann das Verfahren vorteilhaft wiederholt angewendet werden. Weist die Strömungsmaschinenkomponente ein älteres Lot auf, so wird es in dem Verfahren geschmolzen und verbindet sich mit dem neu aufgebrachten Lot.

Bevorzugtermaßen wird das Lot so gemischt, dass das Massenverhältnis von der Legierung zu dem Pulver minimal 3:7 und maximal 7:3 ist. Der Grundwerkstoff weist eine Titanlegierung, TiAl6V4, reines Titan und/oder reines Titan mit Zusatzstoffen, insbesondere Kohlenstoff als Zusatzstoff, auf. Es ist bevorzugt, dass das Lot so hergestellt wird, dass es eine Paste, ein vorgesintertes Material (engl. "presintered preforms, PSP") oder ein Band, insbesondere ein klebendes Band, ist. Dadurch kann das Lot vorteilhaft gezielt lokal auf die von der Erosion betroffenen Stellen der Strömungsmaschinenkomponente aufgetragen werden.

Die Zusammensetzung der Legierung wird bevorzugt so gewählt, dass die Schmelztemperatur der Legierung niedriger als die Beta-Transus-Temperatur des Grundwerkstoffs ist. Die Beta-Transus-Temperatur von reinem Titan liegt bei ca. 880°C, von TiA16V4 liegt sie bei ca. 960°C bis 985°C. Unterhalb dieser Temperatur ist die Gitterstruktur des Titans eine hexagonal dichteste Kugelpackung, oberhalb dieser Temperatur bildet sich eine kubisch raumzentrierte Gitterstruktur aus. Ein Wechsel der Gitterstruktur verkürzt nachteilig die Lebensdauer der Strömungsmaschinenkomponente. Indem die Schmelztemperatur der Legierung unterhalb der Beta-Transus-Temperatur liegt, wird der Wechsel der Gitterstruktur des Grundwerkstoffs vermieden, wodurch die Lebensdauer der Strömungsmaschinenkomponente vorteilhaft lang ist.

Die Legierung ist bevorzugt ein Hartlot, insbesondere mit einer Schmelztemperatur zwischen 750°C und 950°C. Das Hartlot ist vorteilhaft beständig gegen eine Tropfenschlagerosion.

Es ist bevorzugt, dass das Lot nichtmetallische, halbmetallische und/oder keramische Partikel aufweist, dessen Bestandteile durch Diffusionsvorgänge in der flüssigen Legierung eingebunden werden und in einer chemischen Reaktion mit der Legierung einen Hartstoff ausbilden. Die Partikel weisen bevorzugt kohlenstoffhaltige Verbindungen, insbesondere Graphit, auf und der Hartstoff Titancarbid wird aus dem Kohlenstoff und der Legierung gebildet. Bei einem Auftreten von Tropfenschlagerosion kann die Legierung zerstört werden, wodurch das Pulver nachteilig freigelegt wird. Dadurch, dass die Legierung hart ist, ist sie beständig gegen die Tropfenschlagerosion. Durch die Ausbildung des Hartstoffs in der chemischen Reaktion wird die Legierung vorteilhaft härter, wodurch die Lebensdauer der Strömungsmaschinenkomponente vorteilhaft lang ist. Insbesondere das durch die Reaktion von Graphit entstehende Titancarbid hat eine vorteilhaft hohe Festigkeit. Dadurch, dass sich die Partikel zumindest teilweise auflösen, verändern sie sich durch Diffusionsvorgänge und es bilden sich Zonen aus dem Hartstoff aus, die größer als die Partikel sind.

Die Partikel sind bevorzugt plättchenförmig und/oder kugelförmig. Die Wärmemenge und deren Einbringzeit werden bevorzugt derart bestimmt, dass die Partikel in der chemischen Reaktion umgesetzt werden. Die zur Umsetzung der Partikel benötigte Wärmemenge und Einbringzeit hängen von der Größe der Partikel sowie von dem Massenverhältnis aus der Legierung und den Partikeln ab.

Die Wärmemenge und deren Einbringzeit werden bevorzugt derart bestimmt, dass die aufgelösten Partikel teilweise durch Diffusion in den Grundwerkstoff gelangen und dort unter Ausbildung eines Hartstoffs mit dem Grundwerkstoff eine chemische Reaktion eingehen. Dabei gelangt auch die Legierung teilweise in den Grundwerkstoff. Analog dazu gelangt durch Diffusion Material aus dem Grundwerkstoff in die Legierung. Durch die Diffusion und indem der Hartstoff auch in dem Grundwerkstoff gebildet wird gibt es keine sprunghaften Unterschiede mehr in den Eigenschaften, wie z.B. dem Elastizitätsmodul oder der Härte, zwischen dem Grundwerkstoff, dem Hartstoff und der Legierung, wodurch vorteilhaft scharfe metallurgische Kerben vermieden und die Bildung von Rissen zwischen dem Grundwerkstoff und der Legierung unterbunden ist.

Die Wärmemenge und deren Einbringzeit werden bevorzugt so bestimmt, dass die Temperaturen des Lots und der Strömungsmaschinenkomponente niedriger als die Beta-Transus-Temperatur des Grundwerkstoffs sind. Dadurch kann vorteilhaft ein Wechsel der Gitterstruktur des Grundwerkstoffs vermieden werden.

Die erfindungsgemäße Strömungsmaschinenkomponente weist eine Reparaturschicht auf, die mit dem erfindungsgemäßen Verfahren hergestellt ist.

Im Folgenden wird das erfindungsgemäße Verfahren zum Reparieren von Oberflächenschäden einer Strömungsmaschinenkomponente anhand der beigefügten schematischen Zeichnungen erläutert. Es zeigt:
- Figur 1: einen Schnitt eines Oberflächebereichs einer neuen Strömungsmaschinenkomponente mit einschlagenden Tropfen,
- Figur 2: einen Schnitt des Oberflächenbereichs nach Tropfenschlagerosion und
- Figur 3: einen Schnitt des Oberflächenbereichs nach Reparieren durch das erfindungsgemäße Verfahren.

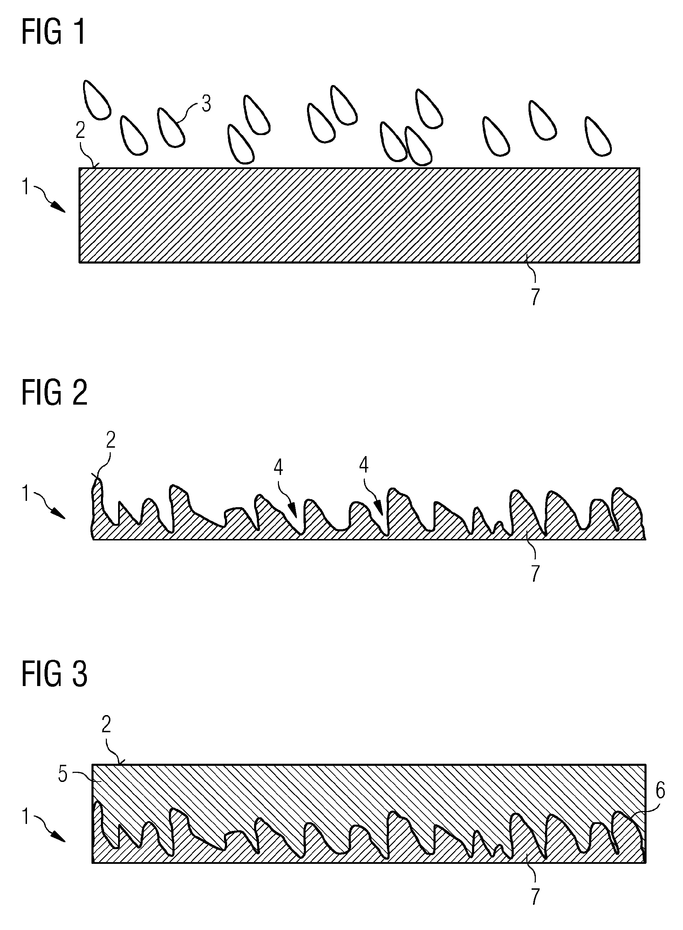

Eine Strömungsmaschinenkomponente, wie z.B. eine Laufschaufel einer Dampfturbine, weist einen Oberflächenbereich 1 auf. Wie es aus Figur 1 ersichtlich ist, weist der Oberflächenbereich 1 einen Grundwerkstoff 7 sowie eine oben liegende Oberfläche 2 auf. Vor Beginn der Tropfenschlagerosion ist die Oberfläche 2 glatt. Eine Mehrzahl an in der Regel gleichförmigen Tropfen 3 ist gezeigt, wobei die Tropfen 3 an ihrer Vorderseite breit und konvex geformt sind, während sie zu ihrer Rückseite hin spitz zulaufen. Die Flugrichtung und damit der Einschlagwinkel der Tropfen 3 auf der Oberfläche 2 hängt von der Geometrie der Laufschaufeln ab und kann, wie beispielsweise in Figur 1 dargestellt, spitz sein. Sobald die Tropfen auf der Oberfläche 2 auftreffen, bildet sich an der Oberfläche 2 eine Tropfenschlagerosion aus.

Wie es in Figur 2 gezeigt ist, ist die Oberfläche 2 des Oberflächenbereichs 1 nach der Tropfenschlagerosion zerklüftet und der Oberflächenbereich 1 weist eine Mehrzahl an Kerben 4 auf. Die Kerben 4 sind im Wesentlichen in die Flugrichtung der Tropfen 3 aus Figur 1 orientiert und die Kerben 4 haben unterschiedliche Tiefen. Denkbar sind jedoch beliebige Formen von Erosion, wie z.B. Mulden oder Risse. Die Strömungsmaschinenkomponente ist aufgrund des Materialabtrags durch die Tropfenschlagerosion schmaler als in Figur 1.

Wie es aus Figur 3 ersichtlich ist, ist auf den erodierten Oberflächenbereich 1 aus Figur 2 eine Reparaturschicht 5 aus einem Lot aufgetragen. Denkbar ist, dass das Lot als ein klebendes Band auf den erodierten Oberflächenbereich 1 aufgebracht wurde. Indem das Lot durch eine Einbringung von Wärme schmelzflüssig wird, hat es die Kerben 4 vollständig ausgefüllt und nach Abkühlen und Erstarren ist die Reparaturschicht 5 fertig gestellt. Das Lot und damit die Reparaturschicht 5 weisen dabei eine Legierung und ein nicht dargestelltes Pulver, welches den Grundwerkstoff aufweist, auf. Zwischen dem Grundwerkstoff 7 und der Reparaturschicht 5 ist eine Grenzfläche 6 ausgebildet. Die Grenzfläche ist durch die gute Anbindung von der Reparaturschicht 6 an den Grundwerkstoff 7 beständig gegen die Bildung von Rissen. Die ursprüngliche Oberflächenkontur der Strömungsmaschinenkomponente ist durch das Verfahren wiederhergestellt, wobei prinzipiell beliebig geformte Oberflächen 2 der Strömungsmaschinenkomponente wiederhergestellt werden können.

Denkbar ist, dass sich an der Grenzfläche 6 eine Diffusionsschicht ausbildet, indem Material durch Diffusion von Reparaturschicht 5 in den Grundwerkstoff 7 gelangt, bzw. indem Material von dem Grundwerkstoff 7 in die Reparaturschicht 5 gelangt. Weiterhin ist denkbar, dass zusätzlich zu dem Pulver mit dem Grundwerkstoff in dem Lot Partikel aus Graphit verteilt sind, die sich während der Wärmezufuhr in der Legierung des Lots lösen und in einer chemischen Reaktion mit der Legierung den Hartstoff Titancarbid bilden.

## Patentansprüche

1. Verfahren zum Reparieren von Oberflächenschäden einer Strömungsmaschinenkomponente, welche einen Titan aufweisenden Grundwerkstoff (7) aufweist, wobei der Grundwerkstoff (7) TiA16V4 oder reines Titan aufweist, mit den Schritten:
- Mischen eines Lots, das eine Titan aufweisende Legierung und ein Pulver aufweist, welches in dem Lot verteilt ist und den Grundwerkstoff aufweist, wobei die Zusammensetzung der Legierung so gewählt wird, dass die Schmelztemperatur der Legierung niedriger als die Beta-Transus-Temperatur des Grundwerkstoffs ist und das Lot so gemischt wird, dass das Massenverhältnis von der Legierung zu dem Pulver minimal 3:7 und maximal 7:3 ist;
- Aufbringen des Lots auf Stellen der Strömungsmaschinenkomponente, an denen sich die Oberflächenschäden befinden;
- Einbringen einer Wärmemenge in das Lot und in die Strömungsmaschinenkomponente, so dass die Legierung flüssig wird und dadurch die Stellen benetzt werden;
- Abkühlen des Lots, so dass die Legierung fest wird.

2. Verfahren gemäß Anspruch 1,
wobei das Lot so hergestellt wird, dass es eine Paste, ein vorgesintertes Material oder ein Band, insbesondere ein klebendes Band, ist.

3. Verfahren gemäß einem der Ansprüche 1 bis 2,
wobei die Legierung ein Hartlot ist, insbesondere mit einer Schmelztemperatur zwischen 750°C und 950°C.

4. Verfahren gemäß einem der Ansprüche 1 bis 3,
wobei das Lot nichtmetallische, halbmetallische und/oder keramische Partikel aufweist, dessen Bestandteile durch Diffusionsvorgänge in der flüssigen Legierung eingebunden werden und in einer chemischen Reaktion mit der Legierung einen Hartstoff ausbilden.

5. Verfahren gemäß Anspruch 4,
wobei die Partikel kohlenstoffhaltige Verbindungen, insbesondere Graphit, aufweisen und der Hartstoff Titancarbid aus dem Kohlenstoff und der Legierung gebildet wird.

6. Verfahren gemäß Anspruch 4 oder 5,
wobei die Partikel plättchenförmig und/oder kugelförmig sind.

7. Verfahren gemäß einem der Ansprüche 4 bis 6,
wobei die Wärmemenge und deren Einbringzeit derart bestimmt werden, dass die Partikel in der chemischen Reaktion umgesetzt werden.

8. Verfahren gemäß einem der Ansprüche 4 bis 7,
wobei die Wärmemenge und deren Einbringzeit derart bestimmt werden, dass die aufgelösten Partikel teilweise durch Diffusion in den Grundwerkstoff gelangen und dort unter Ausbildung eines Hartstoffs mit dem Grundwerkstoff (7) eine chemische Reaktion eingehen.

9. Verfahren gemäß einem der Ansprüche 4 bis 8,
wobei die Wärmemenge und deren Einbringzeit so bestimmt werden, dass die Temperaturen des Lots und der Strömungsmaschinenkomponente niedriger als die Beta-Transus-Temperatur des Grundwerkstoffs (7) sind.

## Claims

1. Method for repairing surface damage to a turbomachine component having a titanium-comprising base material (7), wherein the base material (7) comprises TiAl6V4 or pure titanium, comprising the following steps:
- mixing a solder comprising a titanium-comprising alloy and a powder which is distributed in the solder and comprises the base material, wherein the composition of the alloy is selected such that the melting temperature of the alloy is lower than the beta transus temperature of the base material, and the solder is mixed in such a way that the mass ratio of the alloy to the powder is at least 3:7 and at most 7:3;
- applying the solder to points of the turbomachine component at which the surface damage is located;
- introducing a quantity of heat into the solder and into the turbomachine component, such that the alloy becomes liquid and as a result the points are wetted;
- cooling the solder, such that the alloy becomes solid.

2. Method according to Claim 1,
wherein the solder is produced in such a way that it is a paste, a presintered material or a strip, in particular an adhesive strip.

3. Method according to either of Claims 1 and 2,
wherein the alloy is a brazing solder, in particular with a melting temperature of between 750°C and 950°C.

4. Method according to one of Claims 1 to 3,
wherein the solder comprises nonmetallic, semi-metallic and/or ceramic particles, the constituents of which are bound in the liquid alloy by diffusion processes and form a hard material in a chemical reaction with the alloy.

5. Method according to Claim 4,
wherein the particles comprise carbon-containing compounds, in particular graphite, and the hard material titanium carbide is formed from the carbon and the alloy.

6. Method according to Claim 4 or 5,
wherein the particles are platelet-like and/or spherical.

7. Method according to one of Claims 4 to 6,
wherein the quantity of heat and the time of introduction thereof are determined in such a manner that the particles are converted in the chemical reaction.

8. Method according to one of Claims 4 to 7,
wherein the quantity of heat and the time of introduction thereof are determined in such a manner that the dissolved particles partially pass through diffusion into the base material, where they undergo a chemical reaction with the base material (7), forming a hard material.

9. Method according to one of Claims 4 to 8,
wherein the quantity of heat and the time of introduction thereof are determined in such a way that the temperatures of the solder and of the turbomachine component are lower than the beta transus temperature of the base material (7).

## Revendications

1. Procédé de réparation de dommages superficiels d'un élément de turbomachine, qui a un matériau ( 7 ) de base contenant du titane, le matériau ( 7 ) de base comportant du TiAl6V4 ou du titane pur, comprenant les stades :
- Mélange d'une brasure qui comporte un alliage ayant du titane et une poudre, laquelle est répartie dans la brasure et a le matériau de base, la composition de l'alliage étant choisie de manière à ce que le point de fusion de l'alliage soit plus bas que la température de transition bêta du matériau de base et on mélange la brasure de manière à ce que le rapport en masse de l'alliage à la poudre soit au minimum de 3:7 et au maximum de 7:3;
- Dépôt de la brasure aux endroits des éléments de turbomachine où se trouvent les dommages superficiels,
- Apport d'une quantité de chaleur à la brasure et aux éléments de la turbomachine de manière à ce que l'alliage, devienne liquide et mouille ainsi les endroits ;
- Refroidissement de la brasure de manière à ce que l'alliage devienne solide.

2. Procédé suivant la revendication 1,
dans lequel on prépare la brasure de manière à ce que ce soit une pâte, une matière préfritée ou un ruban, notamment un ruban adhésif.

3. Procédé suivant l'une des revendications 1 à 2,
dans lequel l'alliage est une brasure forte, ayant notamment un point de fusion entre 750°C et 950°C.

4. Procédé suivant l'une des revendications 1 à 3,
dans lequel la brasure comporte des particules non métalliques, semi-métalliques et/ou céramiques dont les constituants sont incorporés à l'alliage liquide par le processus de diffusion et forment un matériau de grande résistance mécanique par une réaction chimique avec l'alliage.

5. Procédé suivant la revendication 4,
dans lequel les particules ont des composés contenant du carbone, notamment du graphite, et on forme le matériau à grande résistance mécanique qu'est le carbure de titane à partir du carbone et de l'alliage.

6. Procédé suivant la revendication 4 ou 5,
dans lequel les particules sont en forme de plaquettes et/ou en forme de sphères.

7. Procédé suivant l'une des revendications 4 à 6,
dans lequel on détermine la quantité de chaleur et sa durée d'apport de manière à ce que les particules soient transformées dans la réaction chimique.

8. Procédé suivant l'une des revendications 4 à 7,
dans lequel on détermine la quantité de chaleur et sa durée d'apport de manière à ce que les particules dissoutes arrivent en partie par diffusion dans le matériau de base et y entrent en réaction chimique avec le matériau ( 7 ) de base avec formation d'un matériau ayant une grande résistance mécanique.

9. Procédé suivant l'une des revendications 4 à 8,
dans lequel on détermine la quantité de chaleur et sa durée d'apport de manière à ce que les températures de la brasure et des éléments de la turbomachine soient plus basses que la température de transition bêta du matériau ( 7 ) de base.
